# EUROPEAN PATENT SPECIFICATION

(11) **EP 1 673 227 B1**
(45) Date of publication and mention of the grant of the patent: **26.01.2011**
(21) Application number: 04755155.1
(22) Date of filing: 14.06.2004
(51) Int. Cl.: B41J 2/165

(54) **APPARATUS FOR DEPOSITING DROPLETS**
VORRICHTUNG ZUR TRÖPFCHENABSCHEIDUNG
APPAREIL DE DEPOT DE GOUTTELETTES

(30) Priority: 13.06.2003 US 462093
(43) Date of publication of application: 28.06.2006
(73) Proprietor: Fujifilm Dimatix, Inc., Lebanon, NH 03766 (US); Heidelberger Druckmaschinen Aktiengesellschaft, 69115 Heidelberg (DE)
(72) Inventor: HOISINGTON, Paul, A., Norwich, VT 05055 (US); BIGGS, Melvin, L., Norwich, VT 05055 (US); BIBL, Andreas, Los Altos, CA 94024 (US)
(74) Representative: Fey, Hans-Jürgen
(86) International application number: PCT/US2004/018811
(87) International publication number: WO 2004/113083

(56) References cited:
- JP-A- 3 234 539
- JP-A- 3 234 539
- JP-A- 9 109 483
- US-A- 4 223 324
- US-A- 4 223 324
- US-A- 4 591 873
- US-A- 4 591 873

## Description

This invention relates to depositing droplets on a substrate.

### BACKGROUND

Ink jet printers are one type of apparatus for depositing droplets on a substrate. Ink jet printers typically include an ink path from an ink supply to a nozzle path. The nozzle path terminates in a nozzle opening from which ink drops are ejected. Ink drop ejection is controlled by pressurizing ink in the ink path with an actuator, which may be, for example, a piezoelectric deflector, a thermal bubble jet generator, or an electrostatically deflected element. A typical print assembly has an array of ink paths with corresponding nozzle openings and associated actuators. Drop ejection from each nozzle opening can be independently controlled. In a drop-on-demand print assembly, each actuator is fired to selectively eject a drop at a specific pixel location of an image as the print assembly and a printing substrate are moved relative to one another. In high performance print assemblies, the nozzle openings typically have a diameter of 50 microns or less, e.g. around 25 microns, are separated at a pitch of 254-762 nozzles/cm (100-300 nozzles/inch), have a resolution of 100 to 3000 dpi or more, and provide drops with a volume of about 1 to 70 picoliters (pl) or less. Drop ejection frequency is typically 10 kHz or more.

Hoisington et al. U.S. Patent no. 5,265,315 describes a print assembly that has a semiconductor body and a piezoelectric actuator. The body is made of silicon, which is etched to define ink chambers. Nozzle openings are defined by a separate nozzle plate, which is attached to the silicon body. The piezoelectric actuator has a layer of piezoelectric material, which changes geometry, or bends, in response to an applied voltage. The bending of the piezoelectric layer pressurizes ink in a pumping chamber located along the ink path. Piezoelectric ink-jet print assemblies are also described in Fishbeck et al. U.S. Patent no. 4,825,227 and Hine U.S. Patent no. 4,937,598.

Document JP3-234539 A describes an ink jet recorder. Four inkjet heads are assembled to a block structure which defines together with the support an inlet gap and an outlet gap so that droplets can be ejected onto the substrate through the enclosed region. There is an air blow fan attributed to the inlet gap and a suction fan attributed to the outlet gap for the purpose of generating an air flow laterally to the substrate lowering relative humidity.

In document US 4,591,873 an inkjet printing apparatus with an orifice array cleaning system is disclosed. The printing head can be brought in a storage position in which the orifice plate is facing a storage and start-up station. Air flow is provided from the station to pressurize the sealed region surrounding the print head assembly. Pressure differentials across the orifice plate that alternately urge ink from the cavity side to the exterior side of the orifice plate and from the exterior side to the cavity side of the orifice plate are produced whereby extraneous particles are cleaned and dislodged from the plate's orifices.

Document US 4,223,324 describes a liquid ejector system with air humidifying means operative during standby periods. A closing member is mounted with respect to the printing head and operative to close its air discharge channel. Liquids in the discharge channel are prevented from becoming dry to eliminate the problem of clogging of the discharge channel.

Document JP 9-109483 is related to a recording device. In order to make a contact with the recording medium uniform a film platen is pressed against a thermal head by pushing the film platen down by the blowout of compressed air.

Printing accuracy is influenced by a number of factors, including the size and velocity uniformity of drops ejected by the nozzles in the assemblies and among multiple assemblies in a printer. The drop size and drop velocity uniformity are in turn influenced by factors such as the dimensional uniformity of the ink paths, acoustic interference effects, contamination in the ink flow paths, and the actuation uniformity of the actuators.

Commercial printing paper can have loose particles that can reduce printing quality.

### SUMMARY

One aspect of the invention features, in general, an apparatus for depositing droplets on a substrate. The apparatus includes a support for the substrate, a droplet ejection assembly positioned over the support for depositing the droplets on the substrate, an enclosure structure and a source of pressurized gas connected to the enclosure structure. The enclosure structure together with the support define an enclosed region through which the droplets are ejected onto the substrate. The enclosure structure together with the support also define an inlet gap and an outlet gap through which the substrate travels. The enclosure being mounted over the droplet ejection assembly. The pressurized gas connected to the enclosure structure provides a flow of gas from the enclosure structure through the gaps.

The inlet and outlet gaps and the gas pressure may be adjusted to deliver the gas through the gap at a velocity greater than that of the substrate. The inlet and outlet gap may be between about 0.1524 to about 2.5400 millimeters (about 0.006 to about 0.100 inch) for a 0.1016 millimeter (0.004 inch) substrate. It may be advantageous to remove particulate matter and moisture from the source of pressurized gas. In some cases, it may be advantageous to add water or other solvent to the source of pressurized gas. In some cases, the pressure of the pressurized gas is from about 24.900889 to about 2490.00889 pascals (about 0.1 inch to about 10 inches water above normal atmospheric pressure).

In other implementations, the enclosure includes a manifold distribution system to deliver the pressurized gas to respective slits adjacent to each gap.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG 1 is a diagrammatic side view of an apparatus for printing on a substrate.
FIG 2 is a perspective view of a print station shown in FIG. 1.
FIG 2A is a cross-sectional view of the print station shown in FIG 2, taken along 2A-2A.
FIG 3 is a perspective view of an alternative print station.
FIG 3A is a cross-sectional view of the print station shown in FIG. 3, taken along 3A-3A.

Like reference symbols in the various drawings indicate like elements.

### DETAILED DESCRIPTION

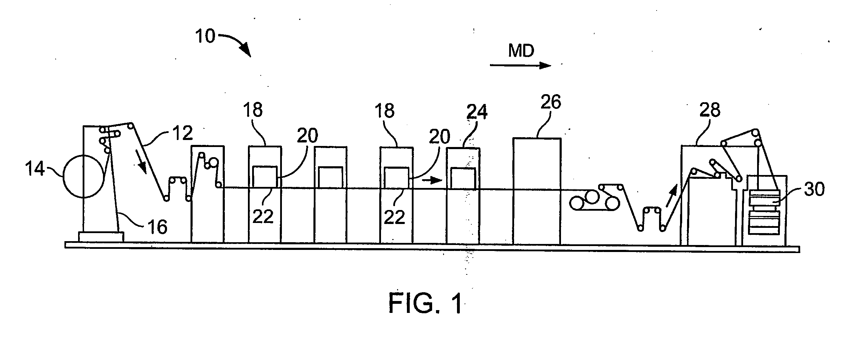

FIG 1 illustrates apparatus 10 for continuously depositing ink droplets on a substrate 12 (e.g. paper). Substrate 12 is pulled from roll 14 that is on supply stand 16 and fed to a series of droplet-depositing stations 18 for placing a plurality of different colored droplets on substrate 12. Each droplet-depositing station 18 has a stationary droplet ejection assembly 20 positioned over the substrate 12 for depositing droplets on the substrate 12. Below the substrate 12 at each depositing station 18 is a substrate support structure 22 (e.g. a porous platen). After the substrate 12 exits the final depositing station 24, it may go to a pre-finishing station 26. The pre-finishing station 26 may be used for drying the substrate 12. It may also be used for UV or other radiation curing of the substrate 12. Next, the substrate 12 travels to the finishing station 28, where it is folded and slit into finished product 30. The substrate feed rate is approximately 0.25-5.0 meters/sec or higher. The droplet ejection assembly may eject droplets of ink. It may also eject a UV curable material, a radiation curable material or other material capable of being delivered as droplets.

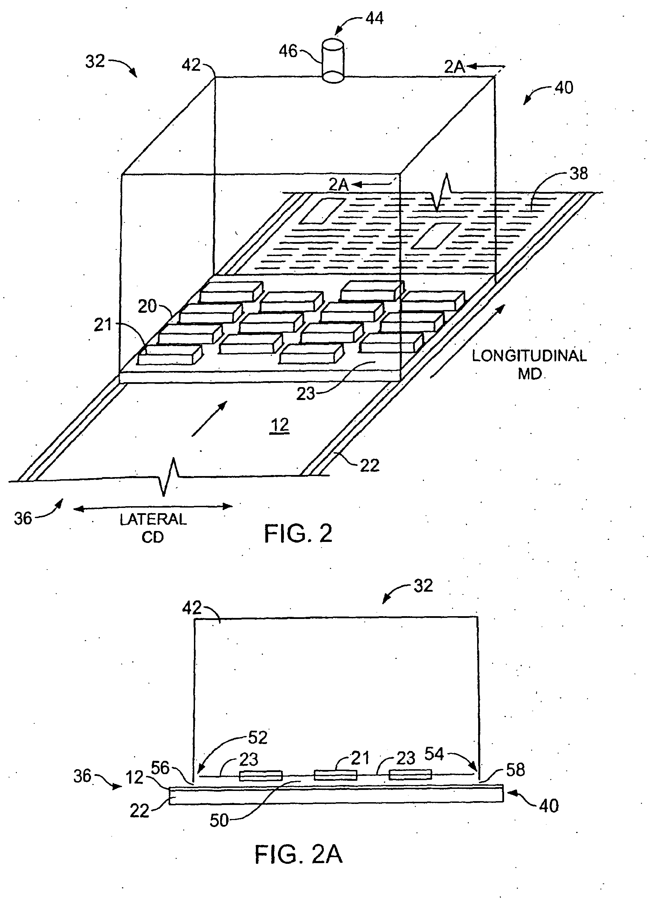

FIG 2 shows an apparatus 32 with a printable substrate 12 traveling in the longitudinal machine direction under a droplet ejection assembly 20. In this embodiment, the droplet ejection assembly 20 is made up of a plurality of discrete print units 21 mounted and sealed in a print unit support 23. The un-printed substrate 12 enters the inlet side 36 and the printed substrate 38 exits the outlet side 40. Substrate support structure 22 (e.g. a porous platen) supports the printable substrate 12. The substrate support structure 22 may also be a curved, non-porous platen or a rotating drum (not shown). Mounted over the droplet ejection assembly is an enclosure 42 for accepting a pressurized gas 44 through inlet 46.

FIG. 2A shows the apparatus shown in FIG. 2, taken along 2A-2A. Pressurized gas entering enclosure 42 travels to a proximal edge 52 and a distal edge 54 of an enclosed region 50, defined by the print unit support 23 and support structure 22. From here, the pressurized gas exits the paper inlet gap 56 and the paper outlet gap 58. This type of construction can remove debris before it has the chance to enter the print zone. In addition, the pressurized gas can help hold the substrate flat against the support structure. Pressure in enclosure 42 is between from about 24.900889 to about 2490.00889 pascals (about 0.1 inch to about 10 inches of water above nominal atmospheric pressure). Having both paper inlet gap 56 and paper outlet gap 58 keeps the pressure in balance under the enclosed region 50, for example, to reduce the risk of paper jams.

The gas pressure should be adjusted so that the gas velocity through the gap is between about 0.25 to about 5 meters/sec. If the gas pressure gets too high, the image may get damaged, the power requirements may become restrictive and there may be excessive noise. Excessive noise can be caused by turbulent flow and as the velocity gets higher, the turbulence becomes greater and, thus, the noise becomes greater. The power required for a given flow rate is proportional to the flow of the gas so that as the flow rate becomes higher, the power requirements become greater.

The inlet gap is from about 0.1524 to about 2.5400 millimeters (about 0.006 to about 0.100 inch) and the outlet gap is from about 0.1524 to about 2.5400 millimeters (about 0.006 to about 0.100 inch) for a 0.1016 millimeter (0.004 inch) substrate (e.g. paper). If the gaps become too large, power requirements may become restrictive and if the gaps become too small the image may become smeared or there might be a paper jam.

The substrate may be paper, plastic or other printable substrate. Typical substrates are approximately 0.0508 to about 0.2032 millimeters (0.002 to about 0.008 inch) thick.

The pressurized gas may be filtered, for example with a HEPA filter, to remove particulate matter and excessive moisture. In some cases, water or other solvent may be added to prevent clogging of the droplet ejection assembly. In some cases, an inert gas environment may be required to aid in curing the droplets. In other cases, other gases may be required to aid in the curing of the droplets.

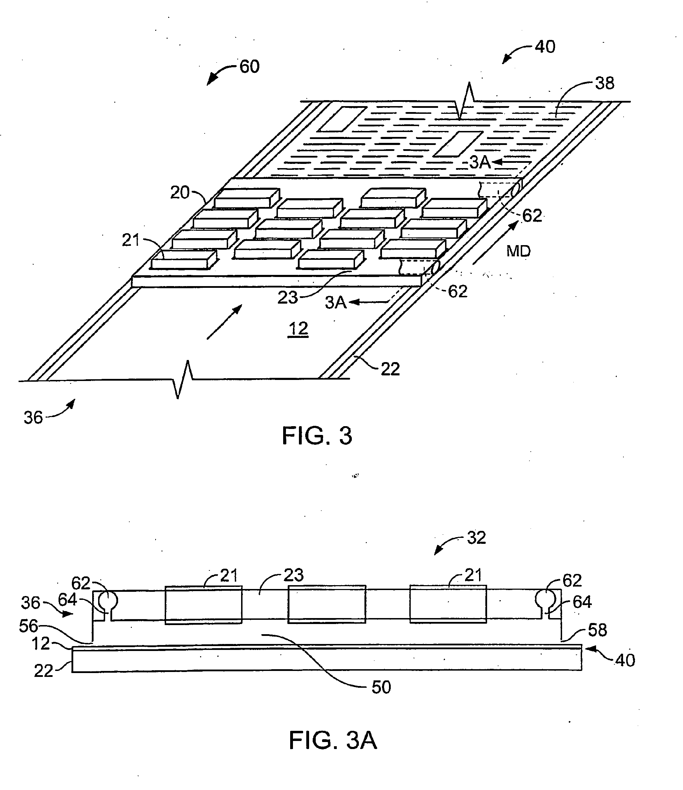

FIG. 3 shows an alternative apparatus 60 for clearing the print path. In this embodiment, the pressurized gas is delivered to a manifold distribution system 62 included in the print unit support 23. FIG 3A shows the alternative apparatus 60, taken along line 3A-3A and illustrates that the pressurized gas travels from the manifold distribution system 62 through a slit 64 in the distribution system. In this embodiment, the slit 64 continues along the entire lateral length of the print unit support 23. Slit 64 delivers pressurized gas to the enclosed region 50 and then to the paper inlet gap 56 and the paper outlet gap 58.

The inlet and outlet gaps are adjusted together with the gas pressure and slit width so that the gas velocity through the gaps preferably is about 1.0 meters/sec.

The inlet gap and the outlet gaps are from about 0.1524 to about 2.5400 millimeters (about 0.006 to about 0.100 inch) for a 0.1016 millimeter (0.004 inch) substrate (e.g. paper).

A number of embodiments of the invention have been described. Nevertheless, it will be understood that various modifications may be made without departing from the scope of the invention. For example, the apparatus illustrated in FIG 3 may be altered by utilizing a plurality of apertures (not shown) in the print unit support 23 instead of slits 64 to convey the pressurized gas to enclosed region 50. The apertures can be constructed so that the pressurized gas does not interfere with the depositing of droplets on the substrate 12. The deposited droplets can be ink or other materials. For example, the deposited droplets may be a UV or other radiation curable material or other material capable of being delivered as droplets. Accordingly, other embodiments are within the scope of the following claims.

## Claims

1. An apparatus (10) for depositing droplets on a substrate (12), comprising a support (22) for said substrate (12) and a droplet ejection assembly (20) positioned over said support (22) for depositing said droplets on said substrate (12) on said support (22), an enclosure (42) defining with said support (22) an enclosed region (50) through which said droplets are ejected onto said substrate (12), said enclosure (42) also defining with said support (22) an inlet gap (56) and an outlet gap (58) through which said substrate (12) travels,
**characterized by**
the enclosure (42) being mounted over the droplet ejection assembly (20), and by a source of pressurized gas (44) connected to said enclosure structure (42) to provide a flow of gas (44) from said enclosure (42) through said gaps (56,58).

2. An apparatus (10) according to claim 1,
**characterized in that**
said enclosure (42) being disposed above said droplet ejection assembly (20).

3. An apparatus (10) according to claim 1,
**characterized in that**
said enclosure (42) comprises a manifold distribution system (62) to deliver said pressurized gas (44) to respective slits (64) adjacent to each gap (56,58).

4. An apparatus (10) according to claim 2 or 3,
**characterized in that**
the pressure of gas (44) is from about 24.900889 pascals to about 2490.00889 pascals pressure.

5. An apparatus (10) according to claim 2, 3 or 4,
**characterized in that**
said inlet gap (56) is from about 0.1524 millimeters to about 2.5400 millimeters and said outlet gap (58) is from about 0.1524 millimeters to about 2.5400 millimeters.

6. An apparatus (10) according to claim 1,
**characterized in that** said droplets comprise ink and said substrate (12) comprises paper.

7. An apparatus (10) according to claim 1,
**characterized in that**
said support (22) is a continuously moving support.

8. An apparatus (10) according to claim 1,
**characterized by**
a filter that removes particulate matter from said source of pressurized gas (44).

9. An apparatus (10) according to claim 1,
**characterized by**
adding means for moisture or for solvent to said source of pressurized gas (44).

10. An apparatus (10) according to claim 1,
**characterized in that**
said gaps (56,58) and the pressure of said gas (44) are sized to deliver said gas (44) through the gaps (56,58) at a velocity greater that that of said substrate (12).

11. An apparatus (10) according to claim 1,
**characterized in that**
the gas (44) is air or the gas has an oxygen content less than that of air or the gas has an oxygen content greater than that of air.

12. An apparatus (10) according to claim 1,
**characterized in that**
said gaps (56,58) and the pressure of said gas (44) are sized to flatten said substrate against said support.

13. An apparatus (10) according to claim 2, 3 or 4,
**characterized in that**
said inlet gap (56) is from about 0.1524 millimeters to about 2.5400 millimeters or said outlet gap (58) is from about 0.1524 millimeters to about 2.5400 millimeters.

14. An apparatus (10) according to claim 1,
**characterized in that** said droplets comprise ink or said substrate (12) comprises paper.

## Patentansprüche

1. Eine Vorrichtung (10) zum Aufbringen von Tröpfchen auf einen Bedruckstoff (12) mit einem Stützelement (22) für den Bedruckstoff (12) und einer über dem Stützelement (22) positionierten Tröpfchenausbringanordnung (20) zum Aufbringen der Tröpfchen auf den Bedruckstoff (12) auf dem Stützelement (22), einem Gehäuse (42) welches mit dem Stützelement (22) einen umschlossenen Bereich (50) definiert, durch den die Tröpfchen auf den Bedruckstoff (12) ausgebracht werden, wobei das Gehäuse (42) ferner mit dem Stützelement (22) einen Einlassspalt (56) und einen Austrittsspalt (58) definiert, durch welchen sich der Bedruckstoff (12) bewegt,
**dadurch gekennzeichnet,**
**dass** das Gehäuse (42) über der Tröpfchenausbringanordnung (20) angeordnet ist und dass zur Bereitstellung eines Gasstroms (44) vom Gehäuse (42) durch die Spalte (56, 58) eine mit der Gehäusestruktur (42) verbundene Druckgasquelle (44) vorgesehen ist.

2. Eine Vorrichtung (10) nach Anspruch 1,
**dadurch gekennzeichnet,**
**dass** das Gehäuse (42) über der Tröpfchenausbringanordnung (20) angeordnet ist.

3. Eine Vorrichtung (10) nach Anspruch 1,
**dadurch gekennzeichnet,**
**dass** das Gehäuse (42) ein Verteilersystem (62) zur Zufuhr des Druckgases (44) zu entsprechenden an den jeweiligen Spalt (56, 58) angrenzenden Schlitzen (64) umfasst.

4. Eine Vorrichtung (10) nach Anspruch 2 oder 3,
**dadurch gekennzeichnet,**
**dass** der Druck des Gases (44) zwischen ungefähr 24,900889 Pascal und ungefähr 2490,00889 Pascal liegt.

5. Eine Vorrichtung (10) nach Anspruch 2, 3 oder 4,
**dadurch gekennzeichnet,**
**dass** der Einlassspalt (56) zwischen ungefähr 0,1524 Millimeter und ungefähr 2,5400 Millimetern beträgt und der Austrittsspalt zwischen ungefähr 0,1524 Millimeter und ungefähr 2,5400 Millimeter beträgt.

6. Eine Vorrichtung (10) nach Anspruch 1,
**dadurch gekennzeichnet,**
**dass** die Tröpfchen Tinte umfassen und der Bedruckstoff (12) Papier umfasst.

7. Eine Vorrichtung (10) nach Anspruch 1,
**dadurch gekennzeichnet,**
**dass** das Stützelement (22) ein sich kontinuierlich bewegendes Stützelement ist.

8. Eine Vorrichtung (10) nach Anspruch 1,
**gekennzeichnet durch**
einen Filter, welcher Schwebstoffe von der Druckgasquelle (44) entfernt.

9. Eine Vorrichtung (10) nach Anspruch 1,
**gekennzeichnet durch**
Hinzufiigemittel für Feuchtigkeit oder Lösungsmittel zur Druckgasquelle (44).

10. Eine Vorrichtung (10) nach Anspruch 1,
**dadurch gekennzeichnet,**
**dass** die Spalte (56, 58) und der Druck des Gases (44) derart dimensioniert sind, dass das Gas (44) durch die Spalte (56, 58) mit einer Geschwindigkeit, die größer ist als die des Bedruckstoffs (12), durch die Spalte (56, 58) geführt wird.

11. Eine Vorrichtung (10) nach Anspruch 1,
**dadurch gekennzeichnet,**
**dass** das Gas (44) Luft ist oder einen geringeren Sauerstoffgehalt als Luft hat oder dass das Gas einen höheren Sauerstoffgehalt als Luft hat.

12. Eine Vorrichtung (10) nach Anspruch 1,
**dadurch gekennzeichnet,**
**dass** die Spalte (56, 58) und der Druck des Gases (44) so dimensioniert sind, dass der Bedruckstoff gegen das Stützelement geglättet wird.

13. Eine Vorrichtung (10) nach Anspruch 2, 3 oder 4,
**dadurch gekennzeichnet,**
**dass** der Einlassspalt (56) zwischen ungefähr 0,1524 Millimeter und ungefähr 2,5400 Millimeter beträgt oder der Austrittsspalt (58) zwischen ungefähr 0,1524 Millimeter und ungefähr 2,5400 Millimeter beträgt.

14. Eine Vorrichtung (10) nach Anspruch 1,
**dadurch gekennzeichnet,**
**dass** die Tröpfchen Tinte umfassen oder dass der Bedruckstoff (12) Papier umfasst.

## Revendications

1. Appareil (10) pour déposer des gouttelettes sur un substrat (12), comprenant un support (22) pour ledit substrat (12) et dispositif d'éjection de gouttelettes (20) positionné sur ledit support (22) pour déposer lesdites gouttelettes sur ledit substrat (12) dudit support (22), une enceinte (42) définissant avec ledit support (22) une région fermée (50) à travers laquelle lesdites gouttelettes sont éjectées sur le dit substrat (12), la dite enceinte (42) définissant également avec ledit support (22) un espace d'entrée (56) et un espace de sortie (58) à travers lesquels voyage ledit substrat (12), **caractérisé en ce que**
l'enceinte (42) est montée au dessus du dispositif d'éjection de gouttelettes (20) et **en ce qu'**une source de gaz comprimé (44) est connectée à ladite structure d'enceinte (42) pour fournir un flux de gaz (44) depuis ladite enceinte (42) à travers lesdits espaces (56, 58).

2. Appareil (10) selon la revendication 1, **caractérisé en ce que** ladite enceinte (42) est disposée au dessus du dispositif d'éjection de gouttelettes (20).

3. Appareil (10) selon la revendication 1, **caractérisé en ce que** ladite enceinte (42) comprend un système de distribution d'air comprimé (62) pour fournir ledit gaz pressurisé (44) aux fentes respectives (64) adjacentes à chaque espace (56, 58).

4. Appareil (10) selon la revendication 2 ou 3, **caractérisé en ce que** la pression du gaz (44) est comprise environ entre 24.90089 pascals et environ 2490.00889 pascals

5. Appareil (10) selon la revendication 2, 3 ou 4, **caractérisé en ce que** ledit espace d'entrée (56) est compris entre 0,1524 millimètre et environ 2,5400 millimètres et ledit espace de sortie (58) est compris entre 0,1524 millimètres et environ 2.5400 millimètres.

6. Appareil (10) selon la revendication 1, **caractérisé en ce que** lesdites gouttelettes comportent de l'encre et ledit substrat (12) du papier.

7. Appareil selon la revendication (10) selon la revendication 1, **caractérisé en ce que** ledit support (22) est un support en déplacement continu.

8. Appareil (10) selon la revendication 1, **caractérisé par** un filtre qui retire les particules de ladite source de gaz pressurisé (44).

9. Appareil (10) selon la revendication 1 **caractérisé par** ajout de moyens pour l'humidité ou pour des solvants à ladite source de gaz pressurisé (44).

10. Appareil (10) selon la revendication 1, **caractérisé en ce que** lesdits espaces (56, 58) et la pression dudit gaz (44) sont dimensionnés pour fournir ledit gaz (44) à travers les espaces (56, 58) à une vitesse supérieure à celle dudit substrat (12).

11. Appareil (10) selon la revendication 1, **caractérisé en ce que** le gaz (44) est de l'air ou le gaz a une teneur en oxygène inférieure à celle de l'air ou le gaz a une teneur en oxygène supérieure à celle de l'air.

12. Appareil (10) selon la revendication 1, **caractérisé en ce que** lesdits espaces (56, 58) et la pression dudit gaz (44) sont dimensionnés pour aplanir ledit substrat contre ledit support.

13. Appareil (10) selon la revendication 2, 3 ou 4, **caractérisé en ce que** ledit espace d'entrée (56) est compris entre environ 0,1524 millimètres et environ 2.5400 millimètres ou ledit espace de sortie (58) est compris entre environ 0,1524 millimètres et environ 2,5400 millimètres.

14. Appareil (10) selon la revendication 1, **caractérisé en ce que** lesdites gouttelettes comprennent de l'encre ou ledit substrat (12) comprend du papier.
